# EUROPEAN PATENT APPLICATION

(11) **EP 1 850 032 A1**
(43) Veröffentlichungstag der Anmeldung: **31.10.2007**
(21) Anmeldenummer: 06716843.5
(22) Anmeldetag: 20.01.2006
(51) Int. Cl.: F16H 3/62, F16H 3/78, F16H 59/04

(54) **MODULARES GETRIEBE MIT KOAXIALEN WELLEN**

(30) Priorität: 24.01.2005 RU 2005101529
(71) Anmelder: Joint Stock Company" Tomsk Transmission Systems", Tomsk, 634009 (RU); MAHYANOV, Hamis Magsumovich, Kazan 420138 (RU); Dudka, Eduard Alexandrovich, Naberazhnye Chelny 423827 (RU)
(72) Erfinder: REMNEVA, Tatiana Andreevna, Tomsk, 634063 (RU); STANOVSKOY, Viktor Vladimirovich, Tomsk, 634063 (RU); KAZAKIAVICHIUS, Sergei Matveievich, Tomsk, 634028 (RU)
(74) Vertreter: Jeck, Anton
(86) Internationale Anmeldenummer: PCT/RU2006/000013
(87) Internationale Veröffentlichungsnummer: WO 2006/080866

(57) **Zusammenfassung**

Das modulare, mit koaxialen Wellen versehene Getriebe gemäß der Erfindung betrifft den Maschinenbau, insbesondere Schrittschaltgetriebe, und kann im Transport- und Landwirtschaftswesen sowie im Werkzeugmaschinenbau verwendet werden. Dieses Getriebe umfasst koaxiale, antreibende und angetriebene Wellen, ein oder mehrere in einem Körper angeordnete Übertragungsmodule und steuerbare Elemente zur Änderung der Übersetzungen. Diese Module können in Zwei-, Drei- oder Vierübertragungsgliedform gemäß der Anzahl der Übertragungsglieder aufgebaut sein, die drehbar bewegbar sind und koaxial zueinander und zu den Getriebewellen angeordnet sind. Das Getriebe kann aus diesen Modulen gebildet sein, die in verschiedenen Kombinationen zusammengestellt sein können. Die steuerbaren Getriebeelemente weisen intermodulare Schalter, die am Moduleingang und/oder-ausgang angeordnet sind, und gehäuseförmige Schaltvorrichtungen für die Zwei-, Drei- oder Vierübertragungsgliedmodule auf. Die verschiedenen Glieder des Zwei-, Drei- oder Vierübertragungsgliedmoduls können in Form des Eingangs oder Ausgangs eines der Module und als Stützglied des Zwei-, Drei- oder Vierübertragungsgliedmoduls verwendet werden, wobei eine größere Anzahl von Übertragungsverhältnissen auf ein und demselben Modul erreichbar ist. Die Aufzählung der Übertragungsverhältnisse von mehreren Modulen sieht eine größere Anzahl von Getrieberädern im Getriebe mit der gleichen Anzahl von Gliedern vor.

## Beschreibung

Die Erfindung betrifft ein modulares Schaltgetriebe mit koaxialen Wellen für den Maschinenbau mit Mechanismen zur gestuften Gangschaltung, das im Transportwesen, landwirtschaftlichen Maschinenbau, Werkzeugmaschinenbau und in anderen Bereichen verwendbar ist.

Gewöhnlich besteht ein Schaltgetriebe aus schaltbaren Zahn- oder Planetengetrieben, die in einem Gehäuse angeordnet und mit steuerbaren Schaltern ausgestattet ist (siehe DymschitsI.I. Schaltgetriebe. Verlag Maschgis, 1960). Die Schalter sind in der Regel als gleitende Zahnräder, Kupplungen, Kupplungen mit Synchronisiergeräten oder als Bremse ausgeführt. Derartige Schaltgetriebe haben gewöhnlich eine relativ große Differenz im Übersetzungsverhältnis zwischen den Stufen.

Zugleich ist es bekannt, dass ein «ideales» Schaltgetriebe eines Fahrzeuges mit einer Übertragungseinrichtung, die ein ununterbrochen zu änderndes Übersetzungsverhältnis aufweist, erreichen lässt. Dies kann annähernd erzielt werden, wenn die Anzahl der Übersetzungen im Schaltgetriebe erhöht und der Schritt zwischen den Stufen gleichzeitig verringert wird, obwohl Schaltgetriebe mit derartigen Übersetzungsverhältnissen bekannt sind, sind sie verhältnismäßig groß und teuer. Der Grund dafür liegt darin, dass die Zahl der Geschwindigkeiten im Schaltgetriebe von der Zahl der Übersetzungsstufen direkt abhängig ist.

Zum Beispiel ermöglicht so das Schaltgetriebe aus dem USA-Patent 3067632, das drei differentiale dreigliedrige Planetengetriebe, zwei steuerbare Reibkupplungen und drei regelbare Bremsen aufweist, sechs Gänge: vier Gänge im Vorwärtslauf und zwei Gänge im Rückwärtslauf.

Zur Vergrößerung der Anzahl der Schaltgänge in dem bekannten Getriebe aus dem Patent RU No.2093734 werden fünf Planetenreihen mit sieben Schalteinheiten verwendet, um zehn Gänge zu erhalten.

Zur Erhöhung der Gangzahl im Schaltgetriebe ist die Vergrößerung der Zahl der elementaren Übersetzungsgruppen nötig, was das Schaltgetriebe verkompliziert und dessen Abmessungen vergrößert.

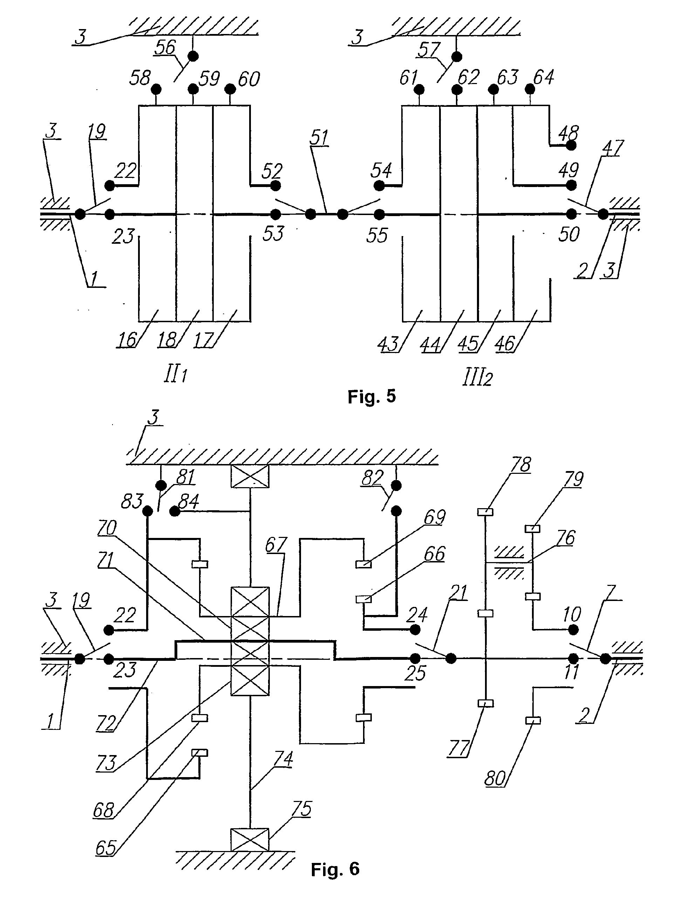

Kleinere Abmessungen erreicht das Schaltgetriebe in Fig. 6 des USA-Patentes Nr. 5016487 durch Kugelübersetzungsgruppen mit periodischen Laufbahnen. Es enthält ein Gehäuse, in dem elementare Übersetzungsgruppen - Module sowie Antriebs-und Abtriebswelle des Schaltgetriebes - angeordnet sind. Das Übersetzungsmodul stellt eine Eingangs- und eine Ausgangsscheibe mit geschlossenen, periodisch gebogenen Laufbahnen und einen Zwischenseparator mit radialen Einschnitten dar, in denen die Kugeln angeordnet sind, die mit den Laufbahnen der Eingangs- und der Ausgangsscheibe zusammenwirken. Die Module sind in Reihe gekoppelt, d.h. ein Eingangsglied des nächsten Moduls ist mit dem Ausgang des vorhergehenden Moduls mittels einer Umkehrscheibe fest verbunden. Die Zwischenglieder - Separatoren aller Module - sind mit dem Gehäuse verbunden. Die Antriebswelle des Schaltgetriebes ist das Eingangsglied des ersten Übersetzungsmoduls. Die Abtriebswelle des Schaltgetriebes wird mit Hilfe des steuerbaren Mehrstellenschalters mit dem Ausgang jedes Moduls in Reihe geschaltet. Der Schalter wird als Kern mit Wülsten, der durch die hohle Ausgangswelle hindurchgeht, ausgeführt. Bei der axialen Verstellung des Kernes verschiebt einer der Wülste die Kugeln, die sich in den Einschnitten der Ausgangswelle befinden, so dass sie mit der Hohlwelle und dem Ausgangsglied eines der Module kämmen. Das beschriebene Schema hat eine beschränkte Zahl von Schaltgängen, die der Zahl der Übersetzungsmodule entspricht, was die Arbeitsbedingungen des Motors bei veränderten Außenbelastungen verschlechtert, d. h. der Grad der Motorauslastung wird verringert.

Das Patent EP 0 102 136 weist eine größere Ganganzahl mit weniger Übersetzungsmodulen auf. Die Module haben zwei oder mehrere Übersetzungsverhältnisse und die unterschiedlichen Übersetzungsverhältnisse der Abtriebswelle werden durch Enumeration dieser Verhältnisse bei aufeinander folgendem Schalten der Module (Binärlogikverfahren) erzielt. Das Schaltgetriebe enthält die im Gehäuse angeordnete koaxiale Antriebs- und Abtriebswelle sowie in Reihe geschaltete Stufen - Module, deren Drehachsen mit der allgemeinen Achse des Schaltgetriebes übereinstimmen. Die treibende und angetriebene Welle ist mit dem Eingang des ersten und dem Ausgang des letzten Moduls unmittelbar verbunden, wobei die Module fest miteinander verbunden sind. Jedes Modul wird durch zwei oder vier bewegliche koaxiale Glieder gebildet. Das Modul mit zwei Übersetzungsverhältnissen hat drei bewegliche koaxiale Glieder: ein Eingangs-, ein Ausgangsglied und ein zusätzliches Zwischenglied. Das Modul mit vier Übersetzungsverhältnissen ist mit vier Gliedern ausgeführt und hat zwei zusätzliche Zwischenglieder. Zum Gangschalten ist jedes Modul mit einem Schalter versehen. Der Zweistellungsschalter des dreigliedrigen Moduls ist mit dem Zwischenglied fest verbunden und verbindet das Modul in den beiden Schaltpositionen entweder mit dem Gehäuse oder mit dem Eingangs- oder Ausgangsglied des Moduls.

Bei der Verbindung des Zwischengliedes mit dem Gehäuse hat das Übersetzungsmodul ein Übersetzungsverhältnis größer als 1. Bei der Verbindung des Zwischengliedes mit dem Eingangs- oder Ausgangsglied dreht sich das ganze Modul und das Übersetzungsverhältnis ist 1. Das Schalten mehrerer solcher in Reihe geschalteter Übersetzungsmodule in der Reihenfolge der Binärlogik erzielt auf der angetriebenen Welle des Schaltgetriebes ein Übersetzungsverhältnis 2ⁿ, wobei n die Zahl der Übersetzungsmodule ist.

Für ein viergliedriges Modul wird ein Schalter mit vier Schaltpositionen verwendet. Der Schalter hat die Möglichkeit, abwechselnd jedes der Zwischenglieder oder die beiden Glieder zusammen mit dem Gehäuse oder mit dem Eingangs- oder Ausgangsglied zu verbinden. In den Positionen des Schalters, wenn eines der Zwischenglieder mit dem Gehäuse und das andere entsprechend mit der Eingangs-oder Ausgangseinheit oder die beiden Verbindungsglieder mit dem Gehäuse verbunden sind, erzielt man drei Übersetzungsverhältnisse, die nicht gleich 1 sind, wenn aber die beiden Zwischenglieder mit der Eingangs- und Ausgangseinheit verbunden sind, erzielt man eine geradzahlige Übersetzung. Das Schalten dieser Module mittels Enumeration der Übersetzungsverhältnisse ergibt eine Ganganzahl 4ⁿ mit n Modulen. Jedes Modul im Patent EP 0 102 136 stellt ein Planetengetriebe mit zwei oder mehr zentralen Rädern und mit Doppelplaneten- oder Blockplanetenrädern auf einem Steg dar. Dieses Schaltgetriebe ermöglicht mit weniger Übersetzungsmodulen eine größere Ganganzahl zu erzielen. Dieses Schaltgetriebe wird als Prototyp gewählt. Mit dreigliedrigen Modulen können mit einem Modul 2 Gänge, mit zwei Modulen 4 Gänge, mit drei Modulen 8 Gänge erhalten werden. Mit viergliedrigen Modulen kann das Schaltgetriebe mit 4 Gängen in einem Modul, mit 16 in zwei Modulen usw. erhalten werden. Es ist ersichtlich, dass durch die Anzahl der Module und der Glieder im Modul die Anzahl der Gänge klar bestimmt wird. In der Praxis ist zum Beispiel für einen Personenwagen das Sechsgang-Schaltgetriebe vollkommen ausreichend und nach dem Prototyp kann es entweder als Achtgang-Schaltgetriebe mit dreigliedrigen Modulen mit drei Schaltern oder als Achtgang-Schaltgetriebe in Kombination eines dreigliedrigen Moduls mit einem viergliedrigen Modul mit drei Zweistellungsschaltern gebaut werden.

Es ist Aufgabe der Erfindung, ein kompaktes Mehrgang-Schaltgetriebe mit der Verwendung von verhältnismäßig wenigen elementaren Übersetzungsbaugruppen aufweisenden Modulen zu schaffen.

Diese Aufgabe wird durch die im Anspruch aufgeführten Merkmale gelöst.

Das technische Ergebnis der Erfindung besteht in der Möglichkeit das Schaltgetriebe mit einer beliebigen Stufenzahl mittels minimaler Modulanzahl mit minimaler Anzahl der Glieder zu schaffen. Ein zusätzliches technisches Ergebnis ist die Verkleinerung der Trägheitskraft im Modul bei der geradzahligen Übersetzung ohne Veränderung der Geschwindigkeit. Das ist für die letzten Module des leistungsfähigen Schaltgetriebes besonders wichtig, da diese Endmodule große Abmessungen und großes Gewicht aufweisen. Außerdem dreht sich der ganze Modul im Prototyp beim Übersetzungsverhältnis 1 und das Drehmoment belastet eine der Verzahnungen im Modul. Im erfindungsgemäßen Schaltgetriebe wird das Drehmoment der geradzahligen Übersetzung direkt übertragen, ohne die Verzahnungen in den Modulen zu belasten.

Das Wesen der Erfindung. Das erfindungsgemäße modulare Schaltgetriebe, basiert auf dem Enumerationsverfahren der Übersetzungsverhältnisse der in Reihe geschalteten Module. Der Begriff "aufeinander folgende Schaltung" bedeutet hier, dass zur Erzielung eines beliebigen Ganges der Kraftstrom von der treibenden Welle zur angetriebenen Welle durch alle Module aufeinander folgend geht. Das Schaltgetriebe umfasst die koaxialen Antriebs- und Abtriebswelle und ein oder mehrere Übersetzungsmodule, die im Gehäuse angeordnet sind, sowie Steuereinheiten der Gangschaltung. Die Module können entweder zweigliedrig, dreigliedrig oder viergliedrig nach der Zahl der darin enthaltenen drehbeweglichen, miteinander und mit der Schaltgetriebewelle koaxialen Glieder sein. Das Schaltgetriebe kann aus den erfindungsgemäßen Modulen in ihren verschiedenen Kombinationen gebaut sein. Der Grundunterschied zum bekannten Prototyp ist das Prinzip der Gangschaltung. Dafür enthalten die Steuereinheiten der Gangschaltung intermodulare Schalter am Eingang und/oder am Ausgang des Moduls sowie Gehäuseschalter für Module mit mehr als zwei Gliedern. Dabei werden als intermodulare Schalter der Schalter am Eingang des ersten Moduls und der Schalter am Ausgang des letzten Moduls bezeichnet, obwohl diese Schaltwerke die genannten Module mit der treibenden und abgetriebenen Welle des Schaltgetriebes verbinden. Die intermodularen Schalter sind mit den Schaltpositionen mindestens mit zwei beliebigen Gliedern des Moduls ausgeführt. Die Gehäuseschalter der drei- und viergliedrigen Module haben Positionen zur Gehäuseverbindung mit mindestens zwei beliebigen Gliedern des Moduls. In Abhängigkeit von der Schalterposition können der Eingang oder Ausgang jedes Moduls sowie das Stützglied des drei- oder viergliedrigen Moduls mit den verschiedenen Gliedern ausgenützt werden, um eine größere Anzahl von Übersetzungsverhältnisse zu erhalten, die in einem und demselben Modul erzielt werden können. Die Enumeration der Übersetzungsverhältnisse mehrerer Module stellt eine größere Gangzahl im Schaltgetriebe bei ein und derselben Anzahl der Glieder sicher.

Als Module können, verschiedene Planetengetriebe oder Planetengetriebe mit Kugelverzahnung der periodischen Laufbahnen verwendet werden.

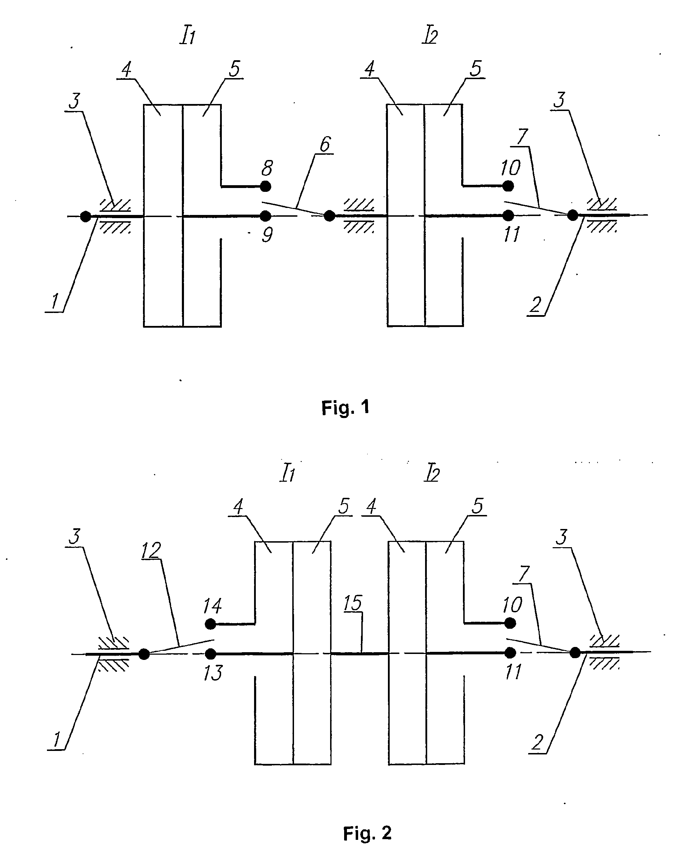

Kurzbeschreibung der Figuren der Zeichnungen. In den Fig. 1 - 5 sind Schaltbilder verschiedener Ausführungsformen des Schaltgetriebes dargestellt.

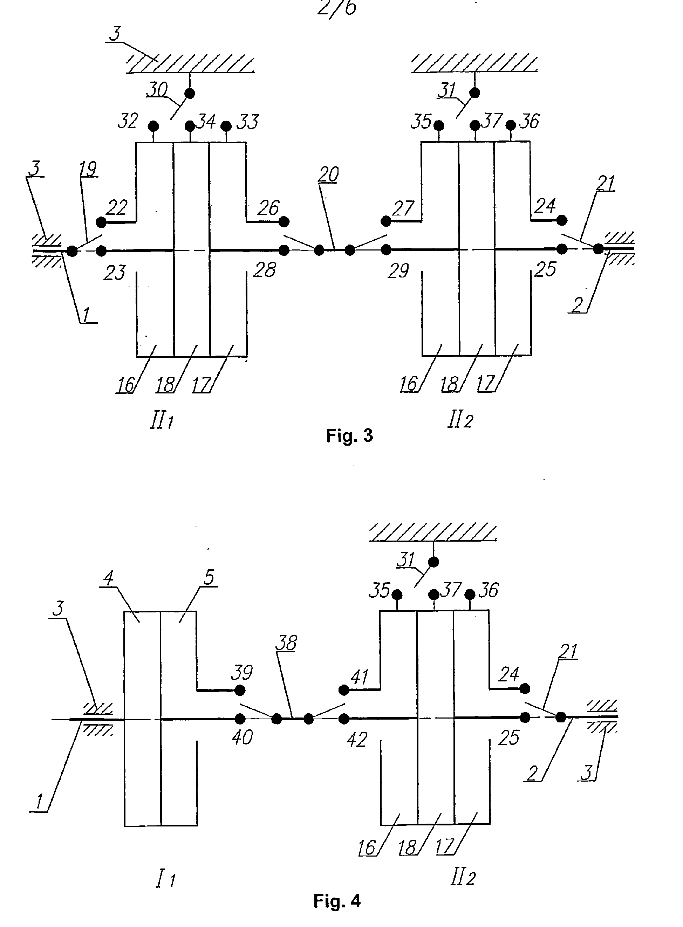

In Fig. 1 und 2 sind Schaltbilder eines Viergang-Schaltgetriebes, das mit zwei zweigliedrigen Modulen aufgebaut ist, dargestellt. In Fig. 3 ist das Schaltbild eines 16-Gang-Schaltgetriebes mit zwei dreigliedrigen Modulen dargestellt. In Fig. 4 ist ein Achtgang-Schaltgetriebe mit einer Kombinationen eines drei- und zweigliedrigen Moduls dargestellt. In Fig. 5 ist das Schaltbild eines Mehrgang-Schaltgetriebes mit einem vier- und einem dreigliedrigen Modul dargestellt.

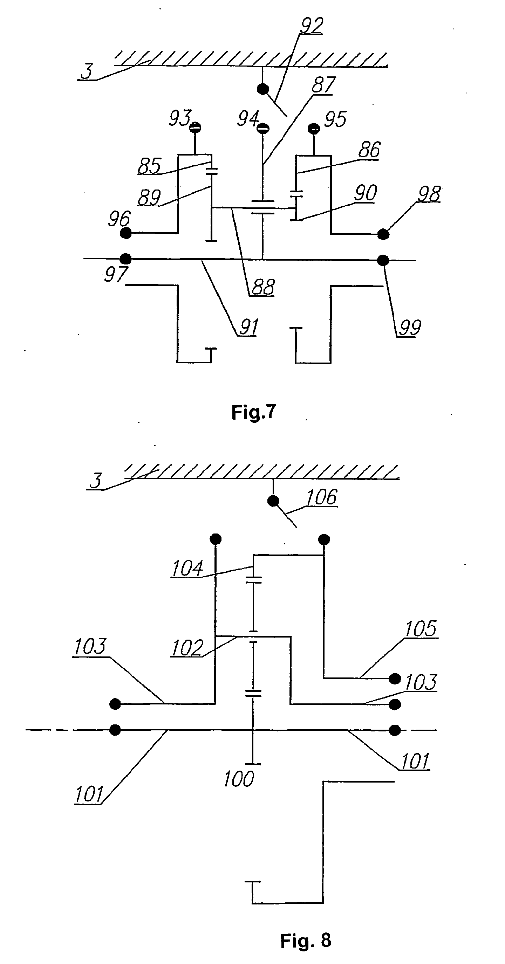

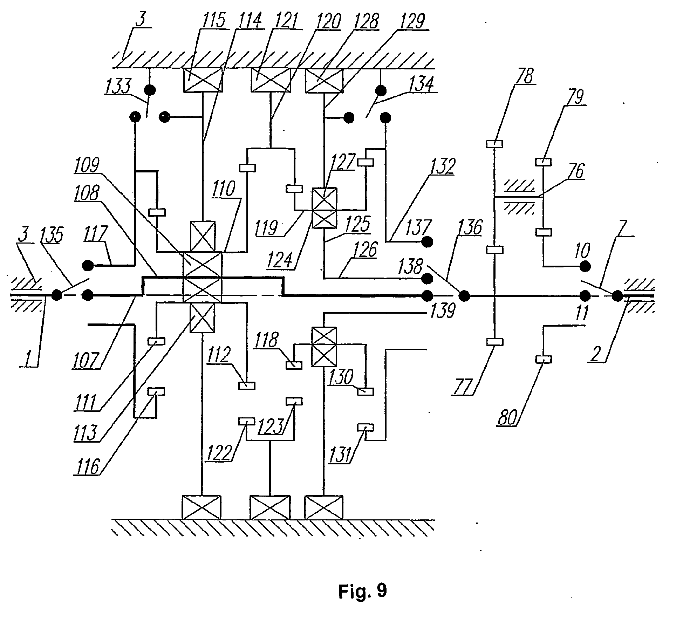

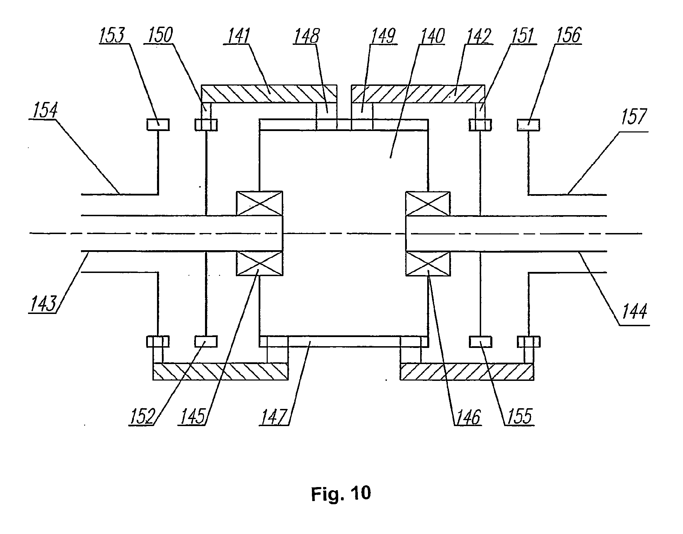

Die weiteren Figuren stellen Beispiele der Konstruktion des Schaltgetriebes mit der Verwendung konkreter Schemen der Übersetzungsmodule dar. In Fig. 6 ist das Schema eines Achtgang-Schaltgetriebes mit der Kombination der zwei- und dreigliedrigen Module, mit Radverzahnung dargestellt. Das zweigliedrige Modul ist als ein einfaches Zahnradgetriebe mit einer Zwischenwelle und das dreigliedrige Modul als ein Planetengetriebe mit einem Doppelplanetenrad ausgeführt. In Fig. 7 und 8 sind die Schemen mit zwei anderen dreigliedrigen Modulen dargestellt, die im Schema der Fig. 6 eingesetzt werden können. In Fig. 9 ist das Schema eines Mehrgang-Schaltgetriebes mit einem viergliedrigen Modul als ein doppeltes Planetengetriebe und mit einem zweigliedrigen Ausgangsmodul aufgrund eines einfachen Zahnradgetriebes mit der Zwischenwelle dargestellt. Es soll bemerkt werden, dass die angeführten Beispiele alle möglichen Aufbauarten des Schaltgetriebes, die von der vorliegenden Erfindung geschützt werden, nicht beschränken. Die Fig. 10 illustriert eine der möglichen Konstruktionen des Vierstellungsumschalters 51 in Fig. 5.

Das Schaltgetriebe in Fig. 1 enthält koaxiale Wellen, eine treibende 1 und eine angetriebene 2, die im Gehäuse 3 eingebaut sind. Das Gehäuse ist in allen Schaltbildern nur symbolisch dargestellt. Die zwei zweigliedrigen Übersetzungsmodule I₁, I₂ sind im Gehäuse aufeinander folgend angeordnet. Jedes Modul enthält zwei drehbewegliche Glieder 4 und 5 mit der einen Drehachse, die mit der Achse der Wellen 1 und 2 des Schaltgetriebes zusammenfällt. In allen Figuren sind die Glieder der Module symbolisch dargestellt. Die treibende Welle 1 des Schaltgetriebes ist unmittelbar mit dem ersten Glied 4 des ersten Modul I₁ verbunden. In den beiden Modulen sind die intermodularen Schalter am Ausgang des Moduls angeordnet. D.h. ein Schalter 6 ist zwischen den Modulen I₁ und I₂ angeordnet und ein anderer Schalter 7 ist zwischen dem zweiten Modul und der angetriebenen Welle 2 des Schaltgetriebes angeordnet. Jeder der intermodularen Schalter hat je zwei Verbindungspositionen zu den zwei Gliedern der Module. Der Zweistellungsschalter 6 verbindet in der Position 8 das Eingangsglied 4 des zweiten Moduls I₂ mit dem Ausgangsglied 5 des ersten Moduls I₁. In der Position 9 verbindet dieser Schalter das Eingangsglied 4 des zweiten Moduls mit dem Eingangsglied 4 des ersten Moduls I₁, d. h. das erste Modul wird in dieser Position des Schalters 6 die Drehbewegung ohne Veränderung der Geschwindigkeit übertragen. Analog verbindet der intermodulare Zweistellungsschalter 7 in der Position 10 das Ausgangsglied 5 des letzten Moduls I₂ mit der angetriebenen Welle 2 des Schaltgetriebes und in der Position 11 das Eingangsglied 4 dieses Moduls mit derselben Welle 2.
Es soll bemerkt werden, dass ein Schaltgetriebe mit denselben Parametern auch mit einer anderen Verbindung der zweigliedrigen Module erzielt werden kann. Im ersten Modul I₁ (s. Fig.2) ist z. B. der intermodulare Schalter 12 am Eingang des Moduls und im zweiten Modul I₂ ist der Umschalter 7 am Ausgang des Moduls erfindungsgemäß auszuführen. Demzufolge wird die treibende Welle 1 des Schaltgetriebes durch den Schalter 12 in der Position 14 mit dem Eingangsglied 4 und in der Position 13 mit dem Ausgangsglied 5 des Moduls I₁ verbunden. Das erste und das zweite Modul sind in diesem Fall unmittelbar miteinander verbunden, d. h. das Ausgangsglied 5 des Moduls I₁ wird durch die Verbindung 15 mit dem Eingangsglied 4 des Moduls 12 verbunden. Somit wird in der Position 13 des Schalters 12 das Drehmoment direkt von der treibenden Welle 1 an den Eingang des zweiten Moduls übermittelt.

Das Schaltgetriebe in Fig. 3 besteht aus zwei aufeinander folgenden dreigliedrigen Modulen II₁ und II₂. Jedes Modul II hat drei koaxiale bewegliche Glieder: das erste 16, das zweite 17 und das Zwischenglied 18. Zwischen der treibenden Welle 1 des Schaltgetriebes und dem ersten Modul II₁, zwischen den Modulen sowie zwischen dem letzten Modul II₂ und der angetriebenen Welle 2 des Schaltgetriebes sind intermodulare Schalter 19, 20 und 21 angeordnet. Der Schalter 19 ist, wie der Schalter 12 im vorhergehenden Schema, ein intermodularer Schalter am Eingang des ersten Moduls und der Schalter 21 ist der Schalter am Ausgang des zweiten Moduls. Die beiden Schalter haben zwei Positionen und verbinden entsprechend die treibende Welle 1 mit dem erstem Glied 16 oder mit dem Zwischenglied 18 des ersten Moduls II₁ (Positionen 22 und 23 des Schalters 19) sowie das zweite Glied 17 oder das Zwischenglied 18 des letzten Moduls II₂ mit der angetriebenen Welle 3 (Positionen 24 und 25 des Schalters 21). Der intermodulare Schalter 20 ist gleichzeitig der Schalter am Ausgang des ersten Moduls und der Schalter am Eingang des zweiten Moduls, weshalb er als Vierstellungsschalter ausgeführt wird. In der Position 26-27 verbindet er das zweite Glied 17 des vorhergehenden Moduls mit dem ersten Glied 16 des nächsten Moduls. In der Position 26-29 verbindet der Schalter 20 das zweite Glied 17 des vorhergehenden Moduls mit dem Zwischenglied 18 des nächsten Moduls. In dieser Position ist der Ausgang des ersten Moduls II₁ das zweite Glied 17 und der Eingang des zweiten Moduls II₂ ist sein Zwischenglied 18. In der Position 28-27 sind das Zwischenglied 18 des vorhergehenden Moduls und das erste Glied 16 des nächsten Moduls verbunden, d.h. der Ausgang des ersten Moduls II₁ ist sein Zwischenglied 18 und der Eingang des zweiten Moduls II₂ ist sein erstes Glied 16. Schließlich ist in der Position 28-29 das Zwischenglied 18 des ersten Moduls mit dem Zwischenglied 18 des zweiten Moduls verbunden, d. h. der Eingang und Ausgang der entsprechenden Module II sind Zwischenglieder 18. Darüber hinaus ist jedes Modul II mit einem Gehäuseschalter 30 und 31 versehen, der mit dem Gehäuse entweder das erste, das zweite oder das Zwischenglied des Moduls (Positionen 32, 33 und 34 des Schalters 30 und Positionen 35, 36 und 37 des Schalters 31) verbindet. Es soll bemerkt werden, dass als Gehäuseschalter steuerbare Bremsen verwendet werden können. Es ist interessant, das Schema in Fig. 2 mit dem ähnlichen Schema im bekannten Prototyp, das auch mit dreigliedrigen Modulen ausgeführt ist, zu vergleichen. Der Prototyp aus zwei dreigliedrigen Modulen stellt nur vier Schaltgänge sicher. Im Schema in Fig. 2, wie später dargestellt wird, ermöglicht der Einsatz zusätzlicher intermodularer Umschalter 19, 20, und 21 und zusätzlicher Positionen 32 und 33 des Gehäuseschalters 30 sowie der Positionen 35 und 36 des Gehäuseschalters 31 bis zu 16 Gänge mit denselben zwei Modulen.

In Fig. 1 - 3 sind die Schemen des Schaltgetriebes, die aus den gleichen Modulen ausgebildet werden, dargestellt. Dabei stellt das Schaltgetriebe in Fig. 1 und 2 vier Schaltgänge und das Schaltgetriebe in Fig. 3 sechzehn Gänge sicher. Sehr häufig sind vier Gänge für die wirksame Arbeit des Motors nicht ausreichend und sechzehn Gänge sind zu viel. Natürlich ist es möglich, zum Erzielen z. B. von 8 Gängen im Schema der Fig. 3 nicht alle Positionen der Schalter auszunützen. Es ist aber viel wirksamer dafür das Schema mit der kleineren Anzahl der Glieder zu verwenden. In Fig. 4 ist das Schema eines Achtgang-Schaltgetriebes mit einem zweigliedrigen Modul I₁ und einem dreigliedrigen Modul II₂ dargestellt. Das Eingangsglied 4 des ersten zweigliedrigen Moduls I₁ ist unmittelbar mit der treibenden Welle 1 des Schaltgetriebes verbunden. Die angetriebene Welle 2 des Schaltgetriebes, wie in vorhergehender Figur, kann mittels des intermodularen Schalters 21 am Ausgang des Moduls II₂ entweder mit dem Zwischenglied 18 des dreigliedrigen Moduls II₂ oder mit seinem zweiten Glied 17 (Positionen des Schalters 24 und 25) verbunden werden. Der intermodulare Schalter 38 ist gleichzeitig der Schalter am Ausgang des Moduls I₁ und der Schalter am Eingang des Moduls II₂ und hat deshalb vier Schaltpositionen. In den Positionen 39 und 40 ist der Schalter 38 mit dem Ausgangsglied 5 und dem Eingangsglied 4 des Moduls I₁ entsprechend verbunden. In den Positionen 41 und 42 ist der Schalter 38 mit dem ersten Glied 16 und mit dem Zwischenglied 18 des Moduls II₂ verbunden. Somit wird in den Positionen 39-41 das Ausgangsglied 5 des zweigliedrigen Moduls I₁ mit dem ersten Glied 16 des zweiten dreigliedrigen Moduls II₂ verbunden. Die Position des Schalters 40-42 stellt die Verbindung des Eingangsgliedes 4 des ersten Moduls I₁ und des Zwischengliedes 18 des zweiten Moduls II₂ sicher, indem dieses Glied 18 zum Eingang des Moduls wird. Genauso wird das Zwischenglied 18 zum Eingang des zweiten Moduls II₂ und in der Position des Schalters 39-42 wird auf das Zwischenglied 18 nur das Drehmoment vom Ausgangsglied 5 des ersten Moduls I₁ übertragen. In der vierten Position des Schalters 38 (Position 40-41) werden das Eingangsglied 4 des ersten Moduls I₁ und das erste Glied 16 des zweiten Moduls II₂ verbunden, d. h. die Drehbewegung wird auf den zweiten Modul ohne Veränderung der Geschwindigkeit mit dem Übersetzungsverhältnis 1 übertragen. Das dreigliedrige Modul II₂ ist auch mit einem Gehäuseschalter 31 versehen, der in der Position 35 das Gehäuse 3 mit dem ersten Glied 16, in der Position 37 mit dem Zwischenglied 18 und in der Position 36 mit dem zweiten Glied 17 verbindet. Im nächsten Schema des Schaltgetriebes wird als zweites Modul das mit dem bekannten Prototyp ähnliche viergliedrige Modul II₂ mit zwei Zwischeneinheiten verwendet. In Fig. 5 wird die treibende Welle 1 durch den Schalter 19 am Eingang des ersten Moduls entweder mit dem ersten Glied 16 des dreigliedrigen Moduls II₁ oder mit seinem Zwischenglied 18 verbunden. Der zweite Übersetzungsmodul II₂ enthält vier Glieder: das erste 43, das zweite 46 und zwei Zwischenglieder 44 und 45. Die angetriebene Welle 2 des Schaltgetriebes ist mit dem Dreistellungsschalter 47 mit dem Ausgang des Moduls II₂ verbunden. In der Position 48 verbindet dieser Schalter das zweite Glied 46 des Moduls II₂ mit der angetriebenen Welle 2. In der Position 49 ist das zweite Zwischenglied 45 dieses Moduls mit der Welle 2 verbunden. In der Position 50 ist mit der Welle 2 das erste Zwischenglied 44 verbunden. Der intermodulare Vierstellungsschalter 51 ist gleichzeitig der Schalter am Ausgang des dreigliedrigen Moduls und am Eingang des viergliedrigen Moduls. In den verschiedenen Positionen (52, 53, 54 und 55) verbindet er jeden der Ausgänge des ersten Moduls I₁ mit dem ersten Glied 43 oder mit dem ersten Zwischenglied 44 des zweiten Moduls II₂ abwechselnd. Die Schalter am Ein- und Ausgang des viergliedrigen Moduls können vertauscht werden. Dann ist der Schalter 51 zwischen den Modulen I₁ und II₂ als Sechsstellungsschalter ausgeführt, um jedes der zwei Glieder am Ausgang des dreigliedrigen Moduls mit dem ersten Glied oder mit jedem der Zwischenglieder des viergliedrigen Moduls zu verbinden. Dementsprechend wird der Schalter 47 am Ausgang des viergliedrigen Moduls zu einem Zweistellungsschalter mit der Möglichkeit, das zweite Zwischenglied oder das zweite Glied des Moduls II₂ mit der angetriebenen Welle 2 des Schaltgetriebes zu verbinden. Die beiden Module sind auch mit den Gehäuseschaltern 56 und 57 versehen. Der Schalter 56 des dreigliedrigen Moduls II ist dabei als Dreistellungsschalter ausgeführt und in der Position 58 verbindet er das Gehäuse 3 mit dem ersten Glied 16, in der Position 59 das Gehäuse mit dem Zwischenglied 18 und in der Position 60 das Gehäuse mit dem zweiten Glied 17 des Moduls I₁. Der Schalter 57 des viergliedrigen Moduls II₂ hat vier Schaltpositionen 61, 62, 63 und 64, in denen das erste Glied 43, das erste 44 und zweite 45 Zwischenglied des Moduls II₂ sowie sein zweites Glied 46 mit dem Gehäuse verbunden werden. In den konkreten Schemen kann man auf einige Positionen der Schalter ohne Veränderung der Gesamtzahl der möglichen Gänge verzichten. Solche Beispiele werden im Weiteren betrachtet.
Als ein konkretes Ausführungsbeispiel wird das Achtgang-Schaltgetriebe in Fig.6 betrachtet. Es umfasst ein dreigliedriges und ein zweigliedriges Modul. Das dreigliedrige Modul stellt ein Exzenter-Planetengetriebe mit den zentralen Rädern (65 und 66 Innen- und Außenverzahnung) und mit einem Doppelplanetenrad 67 (mit den Zahnkränzen 68 und 69) dar. Das Planetenrad 67 ist in den Lagern 70 am Exzenter 71 der Durchgangswelle 72, die durch das Innere des Moduls hindurchgeht, gelagert. Außerdem ist das Planetenrad 67 mit Hilfe der Lager 73 mit dem Steg 74 verbunden, der in den Lagern 75 im Gehäuse 3 gelagert ist. Die Welle 72 mit dem Exzenter 71 wird durch die Lager 71 und 73 mit dem Steg 74 kinematisch verbunden und führt mit ihm identische Bewegungen wie ein Glied aus. Das vorliegende Modul hat drei drehbewegliche koaxiale Glieder: zwei zentrale Räder 65 und 66 sowie ein Glied, das durch den Steg 74 und die Welle 72 mit dem Exzenter 71 gebildet ist. Das Planetenrad 67, obwohl es auch ein bewegliches Glied ist, hat eine variable Drehachse, die mit der allgemeinen Drehachse des Moduls nicht zusammenfällt. Das Rad mit der Innenverzahnung 65 wird für das erste bewegliche Glied des Moduls, und das Rad mit der Außenverzahnung 66 das zweite Glied. Dann werden durch das Zwischenglied des Moduls die Welle 72 und der Steg 74 miteinander verbunden. Im Prinzip kann das Glied, das aus dem Steg 74 und der Welle 72 mit dem Exzenter 71 besteht, für das erste oder das zweite Glied gehalten werden. Dann wird eines der Räder 65 oder 66 zum Zwischenglied. Das Schaltbild des Schaltgetriebes ändert sich deswegen nicht.

Das zweite zweigliedrige Modul ist als ein einfaches Zahnradgetriebe mit einer Zwischenwelle 76 ausgeführt. Das Getriebe besteht aus zwei nacheinander verbundenen Zahnradpaaren 77-78 und 79-80 mit koaxialen Eingangs- und Ausgangsgliedern (die Räder 77 und 80 entsprechend). Am Eingang des dreigliedrigen Moduls ist der steuerbare Schalter 19 angeordnet, der in der Position 22 die treibende Welle 1 des Schaltgetriebes mit dem Rad mit der Innenverzahnung 65 und in der Position 23 mit der Welle 72 d.h. mit dem ersten Glied oder Zwischenglied des Moduls verbindet. Am Ausgang des dreigliedrigen Moduls ist der Schalter 21 vorgesehen, der in der Position 24 das Rad 66 und in der Position 25 die Welle 72 mit dem Eingangsglied des nächsten Moduls, insbesondere mit dem Rad 77 verbindet. Am Ausgang des zweigliedrigen Moduls ist der Schalter 7 vorgesehen, der mit der angetriebenen Welle 2 entweder das Rad 77 oder das Rad 80 verbindet. Der Gehäuseschalter in Fig. 6 ist durch zwei abhängig steuerbare Schalter 81 und 82 ausgebildet. Der Schalter 81 verbindet in der Position 83 das Gehäuse 3 mit dem Rad 65 und in der Position 84 mit dem Steg 74. Der Schalter 82 verbindet das Gehäuse 3 mit dem Rad 66 und soll nur bei vollständig geöffnetem Schalter 81 geschlossen werden.

In Fig. 7 ist eine andere Art des dreigliedrigen Moduls gezeigt, das in dem Schaltgetriebe nach dem angebotenen Schema eingebaut werden kann. Das Modul ist ein Planetengetriebe mit zwei zentralen Rädern mit der Innenverzahnung 85 und 86, dem Steg 87 und dem Doppelplanetenrad 88 mit zwei Zahnkränzen 89 und 90. Der Steg 87 ist mit der Durchgangswelle 91 fest verbunden, d. h. sie kann mit den Schaltern sowohl seitens des Moduleingangs als auch seitens des Modulausgangs verbunden werden. Die Räder 85, 86 und der Steg 87 haben die Möglichkeit, mit dem Gehäuse 3 mit Hilfe des Dreistellungsgehäuseschalters 92 in den Positionen 93, 94 und 95 verbunden zu werden. Außerdem können das zentrale Rad 85 und die Welle 91 in den Verbindungspositionen 96 und 97 des intermodularen Schalters am Eingang des Moduls (der Schalter ist in Fig. nicht gezeigt) und mit dem intermodularen Schalter am Ausgang des Moduls das zentrale Rad 86 und die Durchgangswelle 91 (Positionen 98 und 99 entsprechend) verbunden werden.

Noch ein weiteres Schema eines Planetengetriebes, das im erfindungsgemäßen Schaltgetriebe als ein dreigliedriger Modul verwendet werden kann, ist in Fig. 8 dargestellt. Das Modul enthält ein zentrales Sonnenrad 100 als erstes Glied, das auf der Durchgangswelle 101 zur Verbindung mit den intermodularen Schaltern am Eingang und Ausgang des Moduls fest angeordnet ist. Der Steg 102 ist ein Zwischenglied und ist mit der Hohlwelle 103 zur Verbindung mit den Schaltern am Eingang und Ausgang verbunden. Das zweite Glied des Moduls ist das Rad mit der Innenverzahnung 104 auf der Welle 105 zur Verbindung mit dem Schalter am Ausgang des Moduls. Somit verfügen mit dem Schalter am Eingang des Moduls das erste und das Zwischenglied Verbindungspositionen und mit dem Schalter am Ausgang können alle drei Glieder verbunden werden. Das Zwischenglied - der Steg 102 - und das zweite Glied - das Rad 104 - können mit Hilfe des Gehäuseschalters 106 mit dem Gehäuse 3 des Schaltgetriebes verbunden werden. Das erste Glied - das Sonnenrad 100 - kann in diesem Schema mit dem Gehäuse rein bauartig nicht verbunden werden. Das Modul, wie auch die vorhergehenden, stellt mit Hilfe der Schalter vier Übersetzungsbeziehungen sicher.

Es wird das Schaltgetriebe aufgrund der viergliedrigen und zweigliedrigen Module in Fig.9 betrachtet. Das viergliedrige Modul in diesem Schema umfasst zwei miteinander verbundene Exzenter-Planetengetriebe mit Doppelplanetenrädern.

Das erste Planetengetriebe enthält eine Durchgangswelle 107 mit dem Exzenter 108, auf dem mit Hilfe der Lager 109 das Doppellplanetenrad 111 und 112 aufgebracht ist. Außerdem ist das Doppelplanetenrad durch das Lager 113 mit dem Steg 114 ververbunden, der seinerseits mit dem Lager 115 im Gehäuse 3 gelagert ist. Die Welle 107 mit dem Exzenter 108 ist mit Hilfe der Lager 113 und 115 kinematisch mit dem Steg 114 verbunden und führt mit ihm identische Bewegungen aus. Der Kranz 111 des Planetenrades kämmt mit dem Rad mit der Innenverzahnung 116, das auf der Hohlwelle 117 aufgebracht ist, die mit der Welle 107 koaxial ist. Der zweite Kranz 112 dieses Planetenrades ist für die Verbindung mit dem Kranz 118 des Planetenrades 119 des zweiten Planetenmechanismus bestimmt. Die Verbindung erfolgt mit Hilfe des Doppelrades mit der Innenverzahnung 120, das im Lager 121 im Gehäuse gelagert ist. Der Kranz 122 dieses Rades kämmt mit dem Kranz 112 des Planetenrades und der Kranz 123 mit dem Kranz 118 des Planetenrades 119. Das Planetenrad 119 ist in den Lagern 124 am Exzenter 125 der Hohlwelle 126 gelagert, die das Ausgangsende der Durchgangswelle 107 umschließt. Wie auch im ersten Planetenmechanismus ist der Exzenter 125 mit Hilfe der Lager 127 und 128 mit dem Steg 129 verbunden. Der zweite Kranz 130 des Planetenrades 119 kämmt mit dem Rad mit der Innenverzahnung 131, das auf der Hohlwelle 132 aufgebracht ist, in derem Inneren die Hohlwelle 126 und die Durchgangswelle 107 laufen. Das Rad 116 und der Steg 114 können mit Hilfe des Gehäuseschalters 133 mit dem Gehäuse 3 verbunden werden. Der Steg 129 und das Rad 131 können auch mit dem Gehäuse 3 mit Hilfe des zweiten Gehäuseschalters 134 verbunden werden. Der intermodulare Schalter 135 am Moduleingang hat zwei Schalterpositionen zur Verbindung mit den Wellen 107 und 117, über die die treibende Welle 1 des Schaltgetriebes mit zwei Gliedern des Moduls verbunden werden kann: mit dem Rad 116 und dem Glied, das durch den Steg 114 und Exzenter 108 gebildet ist. Der intermodulare Schalter 136 am Modulausgang hat Verbindungspositionen mit drei Gliedern des Moduls. In der Position 137 ist er mit Hilfe der Welle 132 mit dem Rad 131, in der Position 138 über die Welle 126 mit dem zweiten Zwischenglied, das durch den Steg 129 und Exzenter 125 gebildet ist, verbunden. In der Position 139 ist der Schalter 136 mittels der Durchgangswelle 107 mit dem ersten Zwischenglied, das durch den Steg 114 und Exzenter 108 gebildet ist, verbunden. Das zweite zweigliedrige Modul des Schaltgetriebes ist mit dem entsprechenden Modul in Fig. 6 vollständig identisch und hat dieselben Bezeichnungen der Glieder. Der Schalter 136 ist unmittelbar mit dem ersten Glied des zweiten zweigliedrigen Moduls verbunden, das das Rad 77 darstellt. Der Ausgang des zweigliedrigen Moduls ist mit der angetriebenen Welle 2 mit Hilfe des intermodularen Schalters 7 verbunden, der über die Positionen 10 und 11 Verbindung mit den beiden Gliedern des letzten Moduls herstellt.

Als Gehäuseschalter können die Bremsen oder zweiseitige Reibkupplungen verwendet werden. Als Zweistellungsschalter können beliebige, z. Zt. bekannte Kupplungen, zum Beispiel Reibkupplungen, Magnetkupplungen, Kupplungen mit Gleithülsen etc. eingesetzt werden. Als intermodulare Schalter, die über mehr als zwei Schaltpositionen verfügen, ist es zweckmäßig, Kupplungen mit gleitenden Zahnnabenprofilen einzusetzen. In Fig. 10 ist ein Beispiel für den Aufbau einer Kupplung mit vier Schaltpositionen gezeigt, wie sie als Schalter 51 in Fig. 5 verwendet werden kann. Die Kupplung selbst stellt eine Innenwelle 140 mit zwei diese umfassenden und axial beweglichen Hülsen 141 und 142 dar. Auf den oberen und unteren Bildteilen sind die Hülsen 141 und 142 zur Anschaulichkeit in verschiedenen Schaltpositionen gezeigt. Die Innenwelle 140 wird bezüglich der Zentralwellen 143 und 144 der benachbarten Module in den Lagern 145 und 146 zentriert. Auf der Außenoberfläche hat die Welle 140 die Nuten 147, die in die Nuten 148 und 149 auf der Innenoberfläche der Hülsen 141 und 142 eingreifen. Jede Hülse hat auf den entgegengesetzten Enden noch ein Nutensystem 150 und 151. Die Nuten 150 in der Hülse 141 sind für den Eingriff mit den Nuten 152 auf der Zentralwelle 143 oder den Nuten 153 auf der koaxialen Welle 154 bestimmt, und stellen die Schaltpositionen 51 und 52 in Fig.5 dar. Die Nuten 151 in der Hülse 142 greifen in die entsprechenden Nuten 155 oder 156 der Wellen 144 und 157 ein, und bilden die Schaltpositionen 54 und 55 der Fig. 5. Die Nuten auf den Wellen 143, 154, 144 und 157, wie die Wellen selbst sind in den Figuren nur symbolisch gezeigt.

Es wird die Arbeit des Schaltgetriebes aus zwei zweigliedrigen Modulen, das in Fig.1 dargestellt ist, betrachtet. Die Übersetzungsverhältnisse der Module I₁ und I₂ werden als i₁ und i₂ bezeichnet. Die Drehbewegung der treibenden Welle 1 wird dem mit ihr unmittelbar verbundenen Glied 4 ohne Veränderung der Geschwindigkeit und dem Glied 5 mit einer Veränderung der Geschwindigkeit, die durch das Übersetzungsverhältnis i₁ des Moduls bestimmt ist, übertragen. In der Position 9 des Schalters 6 wird an den Eingang des zweiten Moduls die Drehbewegung vom Glied 4 des ersten Moduls übertragen. In der Position 11 des Schalters 7 wird die Drehbewegung auf die angetriebene Welle des Schaltgetriebes ohne Veränderung der Geschwindigkeit übertragen, d. h. auf der angetriebenen Welle 2 wird eine direkte Übersetzung erzielt. Wenn der Schalter 6 in die Position 8 gestellt wird und der Schalter 7 in der Position 11 bleibt, so ist das Übersetzungsverhältnis auf der angetriebenen Welle 2 dem Übersetzungsverhältnis i₁ des ersten Moduls gleich. In der Kombination der Position 8 des Schalters 6 und der Position 10 des Schalters 7 wird die Drehbewegung an den Moduleingang I₂ ohne Veränderung der Geschwindigkeit übertragen und die Drehgeschwindigkeit der angetriebenen Welle wird durch das Übersetzungsverhältnis i₂ des zweiten Moduls bestimmt. In der Kombination der Positionen 8 und 10 der Schalter 6 und 7 wird auf der angetriebenen Welle 2 ein Übersetzungsverhältnis u=i₁ x i₂ erzielt.
Das Schaltgetriebe in Fig.2 erzielt auf der angetriebenen Welle bei Änderung der Positionen des Eingangsschalters 12 des ersten Moduls und des Schalters 7 am Ausgang des zweiten Moduls in derselben Weise vier Gänge.

Im Schaltgetriebe in Fig.3 kann jedes dreigliedrige Modul mittels der Schalter 19, 20 und 21 am Ein- und Ausgang des Moduls in das Schaltbild des Schaltgetriebes unterschiedlich eingeschlossen werden. In der Position 22 des Schalters 19 wird das Glied 16 zum Ausgangsglied des Moduls II₁. Die zwei übrigen Glieder 18 und 17 können sowohl Ausgangs- als auch Stützglieder je nach der Position des intermodularen Schalters 20 am Modulausgang und des Gehäuseschalters 30 sein, indem sie zwei Übersetzungsverhältnisse des Moduls bestimmen. Wenn der Schalter 20 in der Position 28 steht, ist der Modulausgang das Zwischenglied 18 und das Glied 17 ein Stützglied. Dabei soll der Schalter 30 in der Position 33 stehen. Beim Schalten des Schalters 20 in die Position 26 wird das Glied 17 zum Ausgangsglied des Moduls und das Glied 18 soll dementsprechend mit dem Gehäuse verbunden werden. Das heißt der Schalter 30 soll in der Position 34 stehen. In der Position 23 des intermodularen Schalters 19 am Eingang des Moduls II₁ wird die treibende Welle 1 des Schaltgetriebes mit dem Zwischenglied 18 verbunden. Dabei wird die Drehbewegung in der Position 28 des intermodularen Schalters 20 auf die nächsten Module ohne Veränderung der Geschwindigkeit übertragen, das heißt das Übersetzungsverhältnis des Moduls II₁ ist gleich 1. In der Position 26 des Schalters 20 wird das Glied 17 zum Ausgangsglied, dann soll das Glied 16 ein Stützglied sein, d.h. der Schalter 30 soll in die Position 32 gestellt werden. Damit stellt der Modul II₁ bei Positionsänderung der Schalter 19, 20 und 30 vier verschiedene Gänge sicher. Zum Vergleich stellt das dreigliedrige Modul im bekannten Prototyp nur zwei Gänge sicher. Identisch mit dem ersten Modul arbeitet auch das zweite Modul II₂. Infolgedessen erzielt die Enumeration der vier Übersetzungsverhältnisse des ersten und zweiten Moduls 16 Gänge auf der angetriebenen Welle. Zahlenwerte und Drehrichtungen dieser Gänge werden im nachstehenden in konkreten Beispielen erörtert.

Die Arbeit des Schaltgetriebes in Fig.4 unterscheidet sich von der oben beschriebenen dadurch, dass hier die Schalter 38, 21 und 31 die Enumeration zweier Übersetzungsverhältnisse des ersten Moduls I₁ und vier Übersetzungsverhältnisse des zweiten Moduls II₂ mit der Gesamtanzahl der Getriebegänge gleich 8 gewährleistet.

Das erste Modul in Fig. 5 ist genauso, wie die ähnlichen Module in Fig. 4 aufgebaut. Es wird die Arbeit des zweiten viergliedrigen Moduls III₂ näher betrachtet. Der Schalter 51 am Eingang dieses Moduls verbindet in der Position 54 den Ausgang der vorhergehenden Stufe mit dem ersten Glied 43 des Moduls. Wenn der Gehäuseschalter 57 in den Positionen 62 und 63 steht, sind die Zwischenglieder 44 und 45 mit dem Gehäuse 3 verbunden und sind reaktive Glieder. Als Ausgangsglied dient das Glied 46, deshalb soll der Schalter 47 in diesem Fall in der Position 48 stehen. Wenn der Schalter 57 die Glieder 45 und 46 mit dem Gehäuse verbindet, ist das Ausgangsglied das erste Zwischenglied 43. Möglich ist auch ein dritter Zustand des Moduls, wenn der Gehäuseschalter 57 in den Positionen 62 und 64 die Glieder 44 und 66 mit dem Gehäuse verbindet und das Ausgangsglied das zweite Zwischenglied 45 ist. Wenn der intermodulare Schalter 51 am Eingang des Moduls in der Position 55 steht, wird bei den mit dem Gehäuse verbundenen Gliedern 43 und 46 (Positionen 61 und 64 des Schalters 57) das Glied 45 zum Ausgangsglied und in den Positionen 61 und 63 des Schalters 57 wird das Glied 46 zum Ausgangsglied. Eine geradzahlige Übersetzung am Modul wird erzielt, wenn der Schalter 51 in der Position 55 und der Schalter 47 in der Position 50 steht. Somit kann das viergliedrige Modul mit Hilfe der intermodularen Schalter mindestens 6 Gänge gewährleisten. Die Enumeration von vier Übersetzungsverhältnissen des ersten Moduls II₁ und sechs Übersetzungsverhältnisse des zweiten viergliedrigen Moduls ergibt auf der angetriebenen Welle 2 die unterschiedlichen 24 Gänge.

Es ist selbstverständlich, dass einige Schaltgetriebe Übersetzungsverhältnisse haben, die für diese oder jene Anwendung im Schaltgetriebe nicht nötig sind. In diesem Fall kann die Anzahl der Positionen in den Schaltern verringert oder ein intermodularer Schalter durch eine unmittelbare Verbindung der Modulglieder ersetzt werden.

Es wird ein konkretes Beispiel für das Schaltgetriebe in Fig. 6 betrachtet. Das Innenrad 65 ist das erste Glied; der Steg 74, verbunden mit dem Exzenter 71 und der Durchgangswelle 72, ist das Zwischenglied und das Sonnenrad 66 ist das zweite Glied des ersten Moduls. Die Gehäuseschalter 81 und 82 können jedes der drei Glieder eines Moduls mit dem Gehäuse verbinden. Die Schalter 19 und 21 machen zum Eingang des Moduls entweder das Rad 65 oder den Exzenter 71 auf der Welle 72 und zum Ausgang des Moduls entweder das Rad 66 oder dieselbe Durchgangswelle 72 mit dem Exzenter 71. Als i₁ wird das Übersetzungsverhältnis des ersten Moduls und als Z₆₅, Z₆₆, Z₆₈, Z₆₉, Z₇₇, Z₇₈, Z₇₉ und Z₈₀ die Anzahl der Zähne des entsprechenden Rades oder des Zahnkranzes vom Planetenrad bezeichnet. Das Übersetzungsverhältnis des zweiten Moduls ist bei Änderung des Schalters 7 in die Position 11 gleich 1. In der Position 10 des Schalters 7 ist das Übersetzungsverhältnis des zweiten Moduls i₂ = Z₇₈ x Z₈₀ / Z₇₇ x Z₇₉. Das gemeinsame Übersetzungsverhältnis des Schaltgetriebes wird als u = i₁ x i₂ bestimmt.

Die für den ersten Modul möglichen Übersetzungen und ihre Übersetzungsverhältnisse sind in der Tabelle 1 zusammengefasst. In der letzten Spalte der Tabelle sind Übersetzungsverhältnisse des Schaltgetriebes, die durch die Enumeration der Übersetzungsverhältnisse der beiden Module erzielt werden, dargestellt.

**Tabelle 1.**

| Lfd. Nr. | Der erste Modul | | | | | i des zweiten Moduls | Schaltgetriebe |
|---|---|---|---|---|---|---|---|
| | Positionen der Schalter | Eingangsglied | Stützglied | Ausgangsglied | i des Moduls | | |
| 1. | 22,84,24 | 65 | 74 | 66 | | 1 | |
| 2. | 22, 84, 24 | 65 | 66 | 72 | | 1 | |
| 3. | 23, 83, 24 | 72 | 65 | 66 | | 1 | |
| 4. | 23, 25 | 72 | | 72 | | 1 | |
| 5. | 22,84,24 | 65 | 74 | 66 | | | |
| 6. | 22, 84, 24 | 65 | 66 | 72 | | | |
| 7. | 23,83,24 | 72 | 65 | 66 | | | |
| 8. | 23, 25 | 72 | | 72 | 1 | | |

Somit kann das in Fig. 6 dargestellte Schaltgetriebe 8 Übersetzungsverhältnisse, davon 6 Gänge für den Vorwärtslauf und 2 Gänge für den Rückwärtslauf gewährleisten.

In den nächsten zwei Tabellen sind mögliche Übersetzungsverhältnisse von zwei anderen dreigliedrigen Modulen, die in Fig. 7 und 8 abgebildet sind, dargestellt.

**Tabelle 2**

| Lfd. Nr. | Eingangsglied | Stützglied | Ausgangsglied | Übersetzungsverhältnis | Anmerkung |
|---|---|---|---|---|---|
| 1. | 97 | | 99 | 1 | Direkte Übersetzung |
| 2. | 97 | 93 | 98 | | |
| 3. | 96 | 94 | 98 | p | |
| 4. | 96 | 95 | 99 | 1 - p | |

**Tabelle 3**

| Lfd. Nr. | Eingangsglied | Stützglied | Ausgangsglied | Übersetzungsverhältnis | Anmerkung |
|---|---|---|---|---|---|
| 1. | 101 | | 101 | 1 | Direkte Übersetzung |
| 2. | 101 | 103 | 105 | | |
| 3. | 101 | 104 | 103 | | |
| 4. | 103 | 104 | 101 | | |

An dieser Stelle soll bemerkt werden, dass als Module ein solch konkretes Schema von Planetengetriebe besser auszuwählen wäre, das hinsichtlich des Aufbaus so gestattet ist, dass möglichst viele Glieder sowohl als Eingang und/oder als Ausgang zu verwenden sind und dass möglichst viele Glieder mit dem Gehäuse verbunden werden können.

Es wird jetzt die Arbeit des Schaltgetriebes, das aus einem viergliedrigen und einem zweigliedrigen Modul in Fig. 9 besteht, betrachtet. In der Tabelle 4 sind die möglichen Übersetzungsverhältnisse des ersten viergliedrigen Moduls bei verschiedenen Positionen der Schalter 135, 136, 133 und 134 dargestellt.

**Tabelle 4**

| Lfd. Nr. | Eingangsglied | Stützglieder | | Ausgangsglied | Übersetzungsverhältnis | Anmerkung |
|---|---|---|---|---|---|---|
| 1. | 107 | | | 139 | | Direkte Übersetzung |
| 2. | 107 | 116 | 129 | 132 | | |
| 3. | 107 | 116 | 131 | 126 | | |
| 4. | 117 | 114 | 129 | 132 | | |
| 5. | 117 | 114 | 131 | 126 | | |
| 6. | 117 | 129 | 131 | 139 | | |

Im Unterschied von dem viergliedrigen Modul im bekannten Prototyp, der nur 4 Übersetzungsverhältnisse hat, ermöglicht das erfindungsgemäße viergliedrige Modul mit Hilfe der intermodularen Schalter mindestens 6 Gänge. D. h. ein viergliedriges Modul mit den entsprechenden Schaltern kann die Funktion eines 6-Gang-Schaltgetriebes erfüllen.

Durch die Enumeration der 6 Übersetzungen des ersten Moduls und der 2 Übersetzungen des zweiten Moduls werden 12 Übersetzungsverhältnisse auf der angetriebenen Welle 2 des Schaltgetriebes erzielt. Im bekannten Prototyp kann das Schaltgetriebe, bestehend aus einem viergliedrigen und einem dreigliedrigen Modul jedoch nur 6 Übersetzungsverhältnisse gewährleisten.

Der intermodulare Schalter in Fig. 10, der als Kupplung mit den Gleithülsen ausgebildet ist, funktioniert in folgender Weise. Die Gleithülse 114 in der äußeren linken Position, abgebildet im unteren Teil der Zeichnung, greift mit den Nuten 150 in die Nuten 153 ein und verbindet die Innenwelle 140 der Kupplung mit der Hohlwelle 154, die mit einem Glied des vorhergehenden Moduls verbunden ist (in Fig. nicht gezeigt). In der äußeren rechten Position (im Oberteil der Zeichnung) greift diese Hülse mit den Nuten 150 in die Nuten 152 der Welle 143 ein, die mit einem anderen Glied des Moduls verbunden ist. Die Nuten 148 sind bei der Verstellung der Hülse ständig im Eingriff mit den Nuten 147 der Innenwelle 140. Genauso verbindet die zweite Gleithülse 142 in ihren äußeren Positionen entweder die Welle 144 oder die Welle 157, die mit den unterschiedlichen Gliedern des nächsten Moduls verbunden sind, mit der Innenwelle 140.

In allen oben angeführten Schemen überträgt jedes Modul das Drehmoment ohne Veränderung der Geschwindigkeit direkt vom Eingangs- zum Ausgangsglied mittels der Durchgangswellen ohne die Verzahnung zu belasten. Infolgedessen erhöht sich die Lebensdauer und Betriebszuverlässigkeit der Verzahnung. Außerdem dreht sich mit hoher Geschwindigkeit in den Modulen bei der geradzahligen Übersetzung nur das Eingangsglied, während die übrigen Glieder sich mit niedrigeren Geschwindigkeiten drehen. Gleichzeitig drehen sich im bekannten Prototyp alle Glieder jedes Moduls bei direkter Übersetzung mit der gleichen Geschwindigkeit, die der Geschwindigkeit am Eingangsglied des Moduls entspricht. Daher ist bei direkter Übersetzung die Trägheit im Modul, geschaltet nach dem angebotenen Schema, kleiner als im entsprechenden Modul des bekannten Prototyps.

Es soll bemerkt werden, dass als Übersetzungsmodule im angebotenen Schema des Schaltgetriebes beliebige einfache zweigliedrige Übersetzungen mit den koaxialen Gliedern sowie drei- und viergliedrige Planetengetriebe verwendet werden können. Hohe Zukunftsaussichten hat die Anwendung der Getriebe neuer Generation als Module, die im Ausland unter Bezeichnung "CYCLO", "Twinspin" und in Russland unter Bezeichnung Planeten-Triebstock-Reduziergetriebe hergestellt werden, oder der Module mit der geschlossenen koplanaren Kette der Zahnräder, beschrieben in den Patenten US 6 669 594, US 6 126 566, US 6 418 810, sowie der von unserer Firma entwickelten Kugelübersetzungsbaugruppen unter der allgemeinen Bezeichnung "Reduziergetriebe-Lager".

## Patentansprüche

1. Modulares Schaltgetriebe mit koaxialen Wellen für den Maschinenbau mit der Enumeration der Übersetzungsverhältnisse hintereinander geschalteter Module, die zwischen der treibenden und angetriebenen Welle angeordnet sind und aus zwei oder mehr drehbeweglichen und miteinander verbindbaren Gliedern oder Kombinationen dieser Module bestehen, sowie mit steuerbaren Einheiten für die Gangschaltung,
**dadurch gekennzeichnet,**
**dass** Gehäuseschalter für Module mit drei oder mehr Gliedern und intermodulare Schalter am Eingang und/oder Ausgang der Module vorgesehen sind, dass mittels Gehäuseschalter mit Schaltpositionen wenigstens zwei beliebige Modulglieder mit dem Gehäuse des Schaltgetriebes verbindbar sind, und dass mit den Gehäuseschaltern und den intermodularen Schaltern in ihren unterschiedlichen Schaltpositionen unterschiedliche Übersetzungsverhältnisse des Schaltgetriebes realisierbar sind, wobei unterschiedliche Modulglieder als Eingangs-, Ausgangs- und Stützglied festlegbar sind.
